# EUROPEAN PATENT APPLICATION

(11) **EP 3 132 839 A1**
(43) Date of publication of application: **22.02.2017**
(21) Application number: 15181657.6
(22) Date of filing: 20.08.2015
(51) Int. Cl.: B01D 53/14, B01D 53/50

(54) **SEAWATER FLUE GAS DESULFURIZATION ABSORBER SYSTEM**

(71) Applicant: General Electric Technology GmbH, 5400 Baden (CH)
(72) Inventor: Nilsson, Ghazale Hosseinzadeh Attar, 35255 Växjö (SE)
(74) Representative: General Electric Technology GmbH

(57) **Abstract**

A seawater flue gas desulfurization system and a method of using the same for removal of at least a portion of an acid gas, such as sulfur dioxide, from a flue gas exhausted from a boiler or various furnaces from industrial processes is provided. The seawater flue gas desulfurization system comprises a seawater absorber tower with an interior area comprising a bubble bed absorber arranged between two absorber arrangements each comprising at least one packed module. A liquid distributor is used to distribute a scrubber liquid in a downward flow within the interior of the seawater absorber tower. Flue gas flowing upwardly through the interior area of the seawater absorber tower is mixed with the scrubber liquid distributed by the liquid distributor.

## Description

### Technical Field

The present disclosure relates to a seawater flue gas desulfurization system for removal of at least a portion of an acid gas, such as sulfur dioxide, from a flue gas exhausted from a boiler or various furnaces from industrial processes comprising an acid gas, and a method of using the seawater flue gas desulfurization system for removal of at least a portion of an acid gas, such as sulfur dioxide, from a flue gas exhausted from a boiler or various furnaces from industrial processes comprising an acid gas.

More specifically, the present disclosure relates to a seawater flue gas desulfurization system for removal of at least a portion of an acid gas, such as sulfur dioxide, from a flue gas exhausted from a boiler or various furnaces from industrial processes comprising an acid gas using a bubble bed absorber between absorber arrangements of at least one packed module, and a method of using the seawater flue gas desulfurization system for removal of at least a portion of an acid gas, such as sulfur dioxide, from a flue gas exhausted from a boiler or various furnaces from industrial processes comprising an acid gas using a bubble bed absorber between absorber arrangements of at least one packed module.

### Background

Process gases containing acid gases are generated in many industrial processes. One such industrial process is the combustion of a fuel such as coal, oil, peat, waste, or similar combustible, in a combustion plant such as a power plant, wherein a hot process gas or "flue gas" is generated containing pollutants including acid gases. The generated flue gas requires treatment for removal of at least a portion of the acid gases present therein prior to release of the flue gas into the atmosphere. Flue gas treatment may be accomplished in a wet scrubber such as that disclosed in EP 0 162 536. The disclosed wet scrubber comprises an absorption liquid, which is brought into contact with a process gas for absorption of at least a portion of the acid gases from the process gas. The absorption liquid brought into contact with the process gas may be atomized through nozzles for reaction with the process gas.

WO 2008/105212 discloses a boiler system comprising a boiler, a steam turbine system, and a seawater scrubber. The boiler generates, by combustion of a fuel, high-pressure steam utilized in a steam turbine system for generating electric power. Seawater is collected from the ocean, and is utilized as a cooling medium in a condenser of the steam turbine system. The seawater is then utilized in the seawater scrubber for absorbing sulfur dioxide, SO₂, from flue gas generated in the boiler. Sulfur dioxide, SO₂, absorbed by the seawater forms sulfite and/or bisulfite ions therein. Effluent seawater from the seawater scrubber is then forwarded to an aeration pond. Air is bubbled through the effluent seawater in the aeration pond for oxidation of the sulfite and/or bisulfite ions to sulfate ions for release back to the ocean together with the effluent seawater. The sulfite and/or bisulfite ions are oxidized in the aeration pond to sulfate ions by means of oxygen gas contained in the air bubbled through the effluent seawater.

JP 2012/115764 A discloses a seawater flue gas desulfurization system comprising a flue gas desulfurization tower in which a flue gas is brought into gas-liquid contact with seawater to carry out a desulfurization reaction of sulfur dioxide (SO₂) to sulfurous acid (H₂SO₃). A diluting mixing tank is provided at a lower side of the flue gas desulfurization absorption tower for mixing of sulfur-containing used seawater with fresh seawater for dilution of the sulfur-containing used seawater.

WO 2013/146143 A1 discloses a seawater desulfurization and oxidation treatment device including an oxidation/aeration tank for performing water quality restoration treatment on acid desulfurization seawater containing sulfurous acid (H₂SO₃). This acid desulfurization seawater is generated by subjecting exhaust gas from a boiler to seawater desulfurization, using dilution seawater and air.

Although various desulfurization systems are known, new technologies for flue gas acid gas removal process simplification are needed. New, more compact equipment for flue gas acid gas removal with reduced capital costs is also needed. Further, new technologies and equipment for flue gas acid gas removal with reduced operating costs, while maintaining or increasing acid gas removal efficiency are also needed. Consequently, there is a need for new technologies and equipment for efficient, reduced cost, flue gas acid gas removal.

### Summary

The present disclosure provides a seawater flue gas desulfurization (SWFGD) system and method of using the same to remove at least a portion of an acid gas, such as SO₂, SO₃, HCl, and HF from a flue gas using a relatively simplified process in relatively compact equipment with reduced capital costs, reduced operating costs, and maintained or increased acid gas removal efficiency. As such, the subject SWFGD system comprises a seawater absorber tower fluidly connected to a flue gas generating source, such as a power plant boiler in which a fuel is combusted. In the combustion process, flue gas comprising acid gases such as SO₂, SO₃, HCl, and HF, is generated. The generated flue gas flows from the boiler through a flue gas inlet into the seawater absorber tower for upward flow through an interior area thereof. Within the interior area of the seawater absorber tower is a bubble bed absorber arranged between two absorber arrangements of at least one packed module each. Above the upper most packed module of the top absorber arrangement is a liquid distributor fluidly connected to a seawater source and an alkaline agent source. From the liquid distributor, a scrubber liquid of seawater with alkaline agent is supplied at a relatively low pressure to the interior area of the seawater absorber tower. The relatively low pressure supply of scrubber liquid flows downwardly through the interior area of the seawater absorber tower as the flue gas flows upwardly through the interior area of the seawater absorber tower. The scrubber liquid flows downwardly through the top absorber arrangement before collecting on a relatively less porous top surface of the uppermost packed module of the bottom absorber arrangement. The scrubber liquid collected on the relatively less porous top surface of the uppermost packed module gradually flows downwardly through the bottom absorber arrangement. Scrubber liquid flowing downwardly through the bottom absorber arrangement is collected in a bottom area of the seawater absorber tower arranged below the flue gas inlet. As the scrubber liquid flows downwardly as described, the flue gas flows upwardly through the bottom absorber arrangement prior to bubbling upwardly through the collected scrubber liquid of the bubble bed absorber arranged thereon. From the bubble bed absorber, the flue gas flows upwardly through the top absorber arrangement, past the liquid distributor and out of the seawater absorber tower through a gas outlet.

The subject seawater absorber tower as described above is a simplification of prior art absorber towers requiring many spray levels, each with many nozzles to ensure complete interior area spray coverage for efficient slurry and flue gas mixing for acid gas removal from the flue gas. Additionally, the subject seawater absorber tower as described above is relatively more compact as compared to prior art absorber towers requiring many spray levels, each with many nozzles to ensure complete interior area spray coverage for efficient slurry and flue gas mixing for acid gas removal from the flue gas. Given the simplified bubble bed absorber arranged between absorber arrangements within the subject seawater absorber tower, the subject seawater absorber tower reduces both capital costs and operating costs associated therewith as compared to prior art absorber towers requiring many pumps and many spray levels, each with many nozzles to ensure complete interior area spray coverage for efficient slurry and flue gas mixing for acid gas removal from the flue gas. Further, as the subject seawater absorber tower ensures complete interior area scrubber liquid and flue gas mixing, flue gas acid gas removal efficiency is maintained or increased as compared to prior art absorber towers requiring many pumps and many spray levels, each with many nozzles to ensure complete interior area spray coverage.

In using the subject seawater absorber tower, flue gas flows from a boiler through a flue gas inlet into an interior area of the seawater absorber tower below a bottom absorber arrangement. In interior area of the seawater absorber tower the flue gas flows upwardly through the porous bottom absorber arrangement wet with scrubber liquid. The scrubber liquid flows downwardly in the porous bottom absorber arrangement from a layer of scrubber liquid collected on a relatively less porous top surface of an uppermost packed module of the bottom absorber arrangement. As such, flue gas flowing upwardly through the bottom absorber arrangement is thoroughly contacted by and mixed with scrubber liquid flowing downwardly from the layer of scrubber liquid collected on the relatively less porous top surface of the bottom absorber arrangement for removal of acid gas therefrom. The scrubber liquid collected on the relatively less porous top surface of the bottom absorber arrangement forms a bubble bed absorber. As such, flue gas flowing upwardly through the bottom absorber arrangement contacts and bubbles through the collected layer of scrubber liquid supported on the relatively less porous top surface of the bottom absorber arrangement. Flue gas bubbling upwardly through the collected scrubber liquid is thoroughly contacted by and mixed with the scrubber liquid for acid gas absorption from the flue gas thereby. After bubbling through the collected layer of scrubber liquid, the flue gas flows upwardly through a top absorber arrangement. A space or distance between a top surface of the scrubber liquid layer and a bottom surface of the top absorber arrangement may or may not be present as discussed in more detail below. Flue gas flowing upwardly through the porous top absorber arrangement wet with scrubber liquid is contacted by and mixed with scrubber liquid flowing downwardly therethrough, for scrubber liquid absorption of acid gas from the flowing flue gas. From the top absorber arrangement, flue gas flows upwardly past a liquid distributor prior to flue gas flow out of the interior area of the seawater absorber tower via a gas outlet. Following flow through the gas outlet of the seawater absorber tower, flue gas may be released to the environment or flow to additional equipment for further treatment. The scrubber liquid flowing downwardly through the interior area of the seawater absorber tower and the top absorber arrangement is supplied at a relatively low pressure by the liquid distributor arranged in the interior area above a top surface of the top absorber arrangement. The liquid distributor is fluidly connected to a seawater source and an alkaline agent source. Using seawater from the seawater source and an alkaline agent from the alkaline agent source, a scrubber liquid is formed which is distributed within the interior area by the liquid distributor. Additionally, scrubber liquid collected in a bottom area of the seawater absorber tower arranged below the flue gas inlet may be circulated to the liquid distributor for reuse within the seawater absorber tower.

The method of using the subject seawater absorber tower as described above is a simplification of prior art absorber towers requiring many spray levels, each with many nozzles to ensure complete interior area spray coverage for efficient slurry and flue gas mixing for acid gas removal from the flue gas. Additionally, the subject method of using the seawater absorber tower as described above is relatively more compact as compared to prior art absorber towers requiring many spray levels, each with many nozzles to ensure complete interior area spray coverage for efficient slurry and flue gas mixing for acid gas removal from the flue gas. Given the simplified top and bottom absorber arrangements with a bubble bed absorber therebetween, the subject seawater absorber tower reduces both capital costs and operating costs associated therewith as compared to prior art absorber towers requiring many pumps and many spray levels, each with many nozzles to ensure complete interior area spray coverage for efficient slurry and flue gas mixing for acid gas removal from the flue gas. Further, as the subject seawater absorber tower ensures complete and thorough interior area scrubber liquid and flue gas mixing, flue gas acid gas removal efficiency is maintained or increased as compared to prior art absorber towers requiring many pumps and many spray levels, each with many nozzles to ensure complete interior area spray coverage.

In summary, the subject seawater flue gas desulfurization system comprises a vertical absorber tower defining an interior area, a gas inlet and a gas outlet, a liquid distributor comprising a pipe or a duct with a plurality of perforations, the perforations optionally equipped with nozzles, arranged in an upper portion of the absorber tower below the gas outlet, operable to supply at a relatively low pressure of about 0.5 bar to about 10 bar, a scrubber liquid of seawater and an alkaline agent, such as lime, limestone, sodium hydroxide, or the like, or combinations thereof mixed with the seawater as desired depending on operating conditions, type of alkaline agent and the concentration of the alkaline agent, within the interior area for downward flow thereof, a top absorber arrangement comprising at least one packed module up to 50 packed modules for module construction variation and ease of maintenance, with the top absorber arrangement having a total thickness of about 200 mm to about 10,000 mm arranged a distance of about 50 mm to about 200 mm below the liquid distributor, a bubble bed absorber arranged a distance of about 100 mm to about 500 mm below the top absorber arrangement on a relatively less porous top surface of a bottom absorber arrangement, the bubble bed absorber comprising a layer of collected scrubber liquid having a depth or thickness of about 1 mm to about 500 mm, the bottom absorber arrangement comprising at least one packed module up to three packed modules for module construction variation and ease of maintenance, with the bottom absorber arrangement having a total thickness of about 200 mm to about 2,000 mm arranged a distance of about 0 mm to about 100 mm above the gas inlet, for a flow of flue gas through the gas inlet and into the interior area of the seawater absorber tower.

In summary, a method of using the subject seawater flue gas desulfurization system comprises supplying in an interior area of an absorber tower at a relatively low pressure of about 0.5 bar to about 10 bar a scrubber liquid of seawater and an alkaline agent, such as lime, limestone, sodium hydroxide, or the like, or combinations thereof, mixed with the seawater as desired depending on operating conditions, type of alkaline agent and the concentration of the alkaline agent, from a pipe or a duct of a liquid distributor arranged below a gas outlet of the absorber tower, the pipe or duct having a plurality of perforations, the perforations optionally equipped with nozzles, for scrubber liquid distribution and flue gas contact and mixing for acid gas absorption by the scrubber liquid from the flue gas, providing a porous top absorber arrangement comprising at least one to 50 packed modules for module construction variation and ease of maintenance, for scrubber liquid wetting and flow downwardly therethrough as flue gas flows upwardly therethrough, for scrubber liquid and flue gas contact and mixing for acid gas absorption by the scrubber liquid from the flue gas, providing a bubble bed absorber below the top absorber arrangement by collecting a layer of the scrubber liquid flowing downwardly from the top absorber arrangement on a relatively less porous top surface of a bottom absorber arrangement for bubbling flow of the flue gas upwardly through the collected layer of scrubber liquid for scrubber liquid and flue gas contact and mixing for acid gas absorption by the scrubber liquid from the flue gas, and providing the bottom absorber arrangement comprising at least one to three packed modules for module construction variation and ease of maintenance, for scrubber liquid wetting and flow downwardly therethrough as flue gas flows upwardly therethrough, for scrubber liquid and flue gas contact and mixing for acid gas absorption by the scrubber liquid from the flue gas. As such, the distance between the liquid distributor and the top absorber arrangement measuring from the lowest point of the liquid distributor within the interior area to a top surface of the top absorber arrangement is about 50 mm to about 200 mm. The total thickness of the top absorber arrangement comprising at least one to 50 packed modules measuring from the top surface of the top absorber arrangement to a bottom surface of the absorber arrangement is about 200 mm to about 10,000 mm. The distance between the top absorber arrangement and the bottom absorber arrangement measuring from a bottom surface of the top absorber arrangement to a top surface of the bottom surface arrangement is about 100 mm to about 500 mm. The depth or thickness of the layer of scrubber liquid collected on the relatively less porous top surface of the bottom absorber arrangement measuring from a top surface of the layer to the top surface of the bottom absorber layer is about 1 mm to about 500 mm. The total thickness of the bottom absorber arrangement comprising at least one to three packed modules measuring from the top surface of the bottom absorber arrangement to a bottom surface of the bottom absorber arrangement is about 200 mm to about 2,000 mm. The bottom surface of the bottom absorber arrangement is arranged about 0 mm to about 100 mm above the absorber tower gas inlet measuring from the bottom surface of the bottom absorber arrangement to the top of the gas inlet.

The subject seawater absorber tower as described above is a simplification of prior art absorber towers that require many spray levels, each with many nozzles to ensure complete interior area spray coverage for efficient slurry and flue gas mixing for acid gas removal from the flue gas. The subject seawater absorber tower as disclosed herein is also more compact as compared to prior art absorber towers that require as many as 20 spray levels, each with many nozzles to ensure complete interior area spray coverage for efficient slurry and flue gas mixing. Given the simplified absorber arrangements and bubble bed absorber within the subject seawater absorber tower, the subject seawater absorber tower reduces both capital costs and operating costs associated therewith as compared to the described prior art absorber towers. As the subject seawater absorber tower ensures complete interior area scrubber liquid and flue gas mixing, flue gas acid gas removal efficiency is also maintained or increased as compared to the described prior art absorber towers.

### Brief Description of the Drawings

The subject disclosure will now be described in more detail with reference to the appended drawings in which:
Figure 1 is a schematic side cross-section view of a prior art power plant with a seawater based gas cleaning system;
Figure 2 is a schematic side cross-section view of a power plant with a seawater based gas cleaning system in accordance with the subject disclosure; and
Figure 3 is an enlarged schematic side cross-section view of the seawater absorber tower of Figure 2.

### Detailed Description

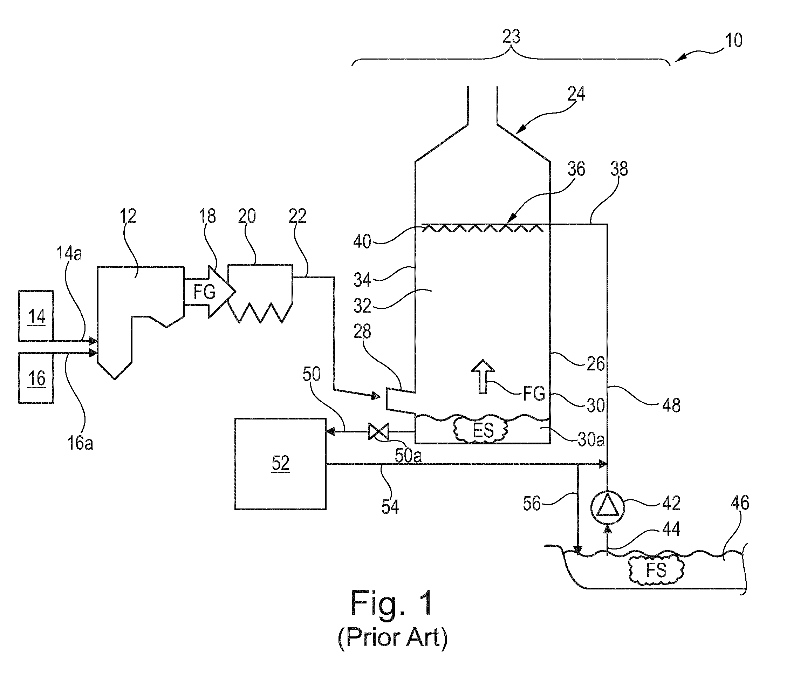

Illustrated in Figure 1 is a schematic side cross-section view of a prior art power plant 10 with a seawater flue gas desulfurization system 23. Power plant 10 comprises a boiler 12 in which a fuel, such as coal, oil, peat, natural gas, or waste, supplied from a fuel source 14 via feeding pipe 14a is combusted in the presence of oxygen, supplied from an oxygen source 16 via oxygen supply duct 16a. Oxygen may, for example, be supplied in the form of air and/or in the form of a mixture of oxygen gas and recirculated gases, in case boiler 12 is a so-called "oxy-fuel" boiler. The combustion of fuel generates a hot process gas in the form of a flue gas FG. Sulfur species contained in the fuel upon combustion form, at least partly, sulfur dioxide, SO₂, which forms part of the flue gas FG.

The flue gas FG flows from boiler 12 via a fluidly connected duct 18, to an optional dust removal device 20. A dust removal device 20, such as an electrostatic precipitator is described in US 4,502,872, which serves to remove dust particles from the flue gas FG. As an alternative, another type of dust removal device 20 may be used, such as for example, a fabric filter as described in US 4,336,035.

Flue gas FG from which most of the dust particles have been removed, flows from the dust removal device 20 via a fluidly connected duct 22 to a seawater flue gas desulfurization system 23 seawater scrubber 24. Seawater scrubber 24 comprises a seawater absorber tower 26. A flue gas inlet 28 is arranged at a lower portion 30 of seawater absorber tower 26. Duct 22 is fluidly connected to flue gas inlet 28 such that flue gas FG flowing from dust removal device 20 via duct 22 enters interior area 32 of seawater absorber tower 26 via flue gas inlet 28.

After entering interior area 32, flue gas FG flows vertically upward through seawater absorber tower 26, as indicated by arrow FG. Central portion 34 of seawater absorber tower 26 is equipped with a single or a number of spray arrangements 36 arranged vertically one above each other. In the example of Figure 1, there is a single such spray arrangement 36 illustrated, and typically there are 1 to 20 such spray arrangements 36 in a seawater absorber tower 26. Each spray arrangement 36 comprises a supply pipe 38 and a number of nozzles 40 fluidly connected to each supply pipe 38. Seawater supplied via supply pipe 38 to nozzles 40 is atomized by means of nozzles 40 and contacts in interior area 32 of seawater absorber tower 26, the flue gas FG for absorption of sulfur dioxide, SO₂, therefrom.

A pump 42 is arranged for pumping fresh seawater FS via fluidly connected suction pipe 44 from ocean 46, and forwarding the fresh seawater FS via fluidly connected pressure pipe 48 to fluidly connected supply pipe 38.

In accordance with an alternative embodiment, fresh seawater FS supplied by pump 42 to supply pipe 38 may have been previously utilized as cooling water in steam turbine systems (not shown) associated with boiler 12 prior to such fresh seawater FS being utilized in seawater scrubber 24.

Seawater atomized by nozzles 40 in interior area 32 of seawater absorber tower 26 flows downwardly within seawater absorber tower 26 and absorbs sulfur dioxide from flue gas FG flowing vertically upwardly within interior area 32 of seawater absorber tower 26. As a result of such absorption of sulfur dioxide by the seawater, the fresh seawater FS gradually turns into effluent seawater ES as it flows downwardly within interior area 32 of seawater absorber tower 26. Effluent seawater ES is collected in collection tank 30a in lower portion 30 of seawater absorber tower 26 and is forwarded, via fluidly connected effluent pipe 50, from seawater absorber tower 26 to an effluent seawater treatment system 52. Effluent seawater ES flow from seawater absorber tower 26 to effluent seawater treatment system 52 via effluent pipe 50 is controlled by valve 50a. Once treated, treated effluent seawater flows from effluent seawater treatment system 52 via pipe 54. Pipe 54 is fluidly connected to release pipe 56 for release of treated effluent seawater therethrough into a seawater source such as ocean 46. As another option, pipe 54 may also be fluidly connected to pressure pipe 48 for circulation of treated effluent seawater to seawater absorber tower 26 for use therein.

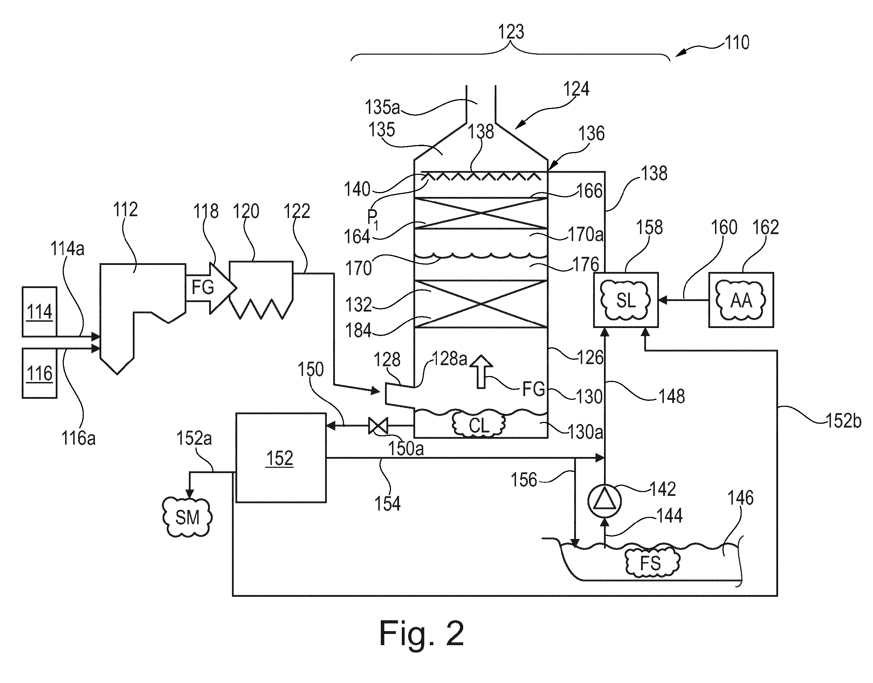

Illustrated in Figure 2 is a schematic side cross-section view of a power plant 110 with a seawater flue gas desulfurization system 123 in accordance with the subject disclosure. Power plant 110 comprises a boiler 112 in which a fuel, such as coal, oil, peat, natural gas, or waste, supplied from a fuel source 114 via feeding pipe 114a is combusted in the presence of oxygen, supplied from an oxygen source 116 via oxygen supply duct 116a. Oxygen may, for example, be supplied in the form of air, oxygen and/or in the form of a mixture of oxygen gas and recirculated gases, in case boiler 112 is a so-called "oxy-fuel" boiler. The combustion of fuel generates a hot process gas in the form of a flue gas FG. Sulfur species contained in the fuel upon combustion form, at least partly, sulfur dioxide, SO₂, which forms part of the flue gas FG along with potentially other acid gases, such as such as SO₃, HCl, and HF.

The flue gas FG flows from boiler 112 via a fluidly connected duct 118, to an optional dust removal device 120. A dust removal device 120, such as an electrostatic precipitator is described in US 4,502,872, which serves to remove dust particles from the flue gas FG. As an alternative, another type of dust removal device 120 may be used, such as for example, a fabric filter as described in US 4,336,035.

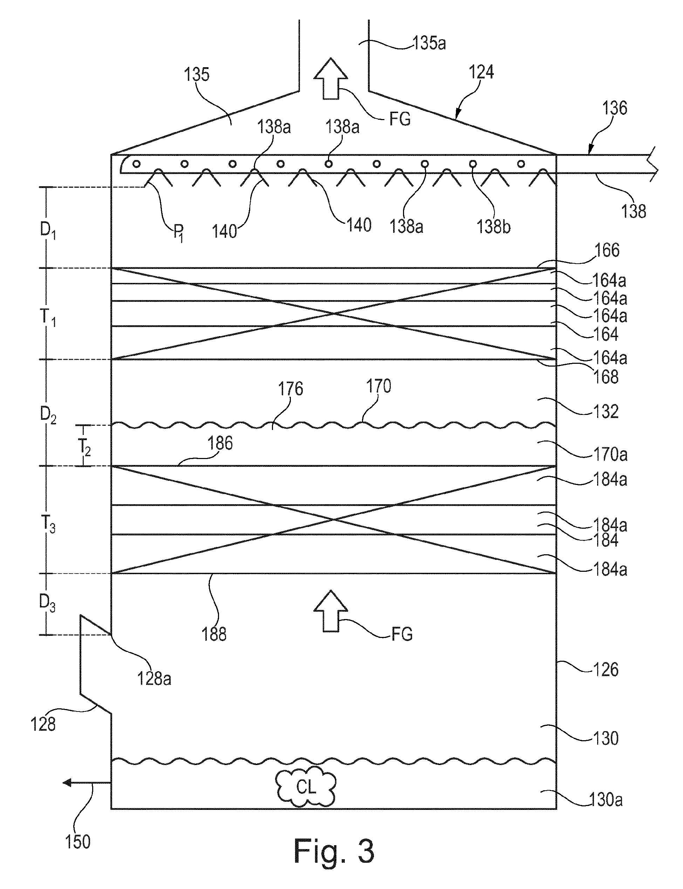

Flue gas FG from which most of the dust particles have been removed, flows from the dust removal device 120 via a fluidly connected duct 122 to a seawater flue gas desulfurization system 123 seawater scrubber 124, which is also illustrated in Figure 3 in an enlarged view. Seawater scrubber 124 comprises a seawater absorber tower 126. A flue gas inlet 128 is arranged at a lower portion 130 of seawater absorber tower 126. Duct 122 is fluidly connected to flue gas inlet 128 such that flue gas FG flowing from dust removal device 120 via duct 122 enters interior area 132 defined by seawater absorber tower 126 via flue gas inlet 128.

After entering interior area 132, flue gas FG flows vertically upward through vertical seawater absorber tower 126, as indicated by arrow FG. Top portion 135 of seawater absorber tower 126 is equipped with a gas outlet 135a. Arranged below the gas outlet 135a is a liquid distributor 136 comprising a supply duct or pipe 138 with a plurality of perforations138a at least through a lower portion 138b thereof. The plurality of perforations 138a may be optionally equipped with nozzles 140 fluidly connected thereto. A pump 142 is arranged for pumping fresh seawater FS from ocean 146 via fluidly connected suction pipe 144, to fluidly connected pressure pipe 148 and fluidly connected scrubber liquid tank 158. Also fluidly connected to scrubber liquid tank 158 is supply duct 160. Supply duct 160 is fluidly connected to an alkaline agent source 162. As such, an alkaline agent AA from alkaline agent source 162 is supplied via supply duct 160 to scrubber liquid tank 158 for mixing of the alkaline agent AA with the fresh seawater FS to produce a scrubber liquid SL therein. Alkaline agent AA is a basic material that interacts with acid gases to remove acid gases from the flue gas FG upon contact therewith. Examples of basic materials useful as alkaline agents AA in the subject scrubber liquid SL include lime, limestone, sodium hydroxide, combinations thereof, and the like. Due to cost considerations, limestone is the preferred alkaline agent AA. The fresh seawater FS and alkaline agent AA are mixed as desired depending on operating conditions, type of alkaline agent and the concentration of the alkaline agent. After mixing the fresh seawater FS with the alkaline agent AA to produce the scrubber liquid SL, the scrubber liquid SL is supplied at a relatively low pressure of about 0.5 bar to about 10 bar via supply pipe 138 of liquid distributor 136 through perforations 138a optionally equipped with nozzles 140. Accordingly, through perforations 138a the scrubber liquid SL is distributed at a relatively low pressure of about 0.5 bar to about 10 bar within interior area 132 of seawater absorber tower 126 for downward flow of the scrubber liquid SL therethrough.

As best illustrated in Figure 3, arranged horizontally across seawater absorber tower 126 a distance D1 below liquid distributor 136 is a top absorber arrangement 164. Distance D1 is measured from a lowest point P1 of liquid distributor 136 within interior area 132 of seawater absorber tower 126 to a top surface 166 of the top absorber arrangement 164. Distance D1 is about 50 mm to about 2,000 mm for efficient scrubber liquid SL distribution over the porous top absorber arrangement 164. Top absorber arrangement 164 comprises at least one to as many as 50 packed modules 164a of like or differing construction, in like or differing materials selected from the group consisting of plastic, steel, wood, and suitable materials for enhanced flue gas-scrubber liquid contact. Examples of such suitable materials for construction of the subject packed modules 164a include Mellapak™ structured packing (available from Sulzer Chemtech AG, Winterthur, CH) and Pall™ rings (available from Raschig GmbH, Ludwigshafen, DE). Top absorber arrangement 164 comprises at least one to as many as 50 individual packed modules 164a for ease in packed module 164a construction and material variation, as well as for ease of maintenance or replacement of individual packed module(s) 164a, rather than maintenance on or replacement of an entire, potentially relatively large, top absorber arrangement 164. The total thickness T1 of the top absorber arrangement 164 is measured from top surface 166 of top absorber arrangement 164 to bottom surface 168 of top absorber arrangement 164. The total thickness T1 of the top absorber arrangement 164 is about 200 mm to about 10,000 mm in thickness for efficient flue gas acid gas absorption by the scrubber liquid SL.

Scrubber liquid SL distributed from perforations 138a of liquid distributor 136 in interior area 132 of seawater absorber tower 126 flows downwardly within seawater absorber tower 126 through distance D1 absorbing sulfur dioxide from flue gas FG flowing vertically upwardly within interior area 132 of seawater absorber tower 126. Scrubber liquid SL flowing downwardly in seawater absorber tower 126 thereafter flows downwardly through each of the packed modules 164a of top absorber arrangement 164 where the scrubber liquid SL contacts and mixes with flue gas FG flowing upwardly through the top absorber arrangement 164. As such, the scrubber liquid SL absorbs acid gas from the flue gas FG upon contact and mixing therewith within the top absorber arrangement 164.

Arranged a distance D2 beneath the top absorber arrangement 164 is bottom absorber arrangement 184. Distance D2 is measured from the bottom surface 168 of the top absorber arrangement 164 to a top surface 186 of bottom absorber arrangement 184. Distance D2 is about 100 mm to about 500 mm for efficient flue gas FG acid gas removal by the scrubber liquid SL therein. Scrubbing liquid SL flowing from top absorber arrangement 164 in distance D2 is collected to form a layer 170a of scrubber liquid SL on relatively less porous top surface 186 of bottom absorber arrangement 184 thereby forming a bubble bed absorber 176.

Bubble bed absorber 176 comprises a layer 170a of scrubber liquid SL collected on relatively less porous top surface 186 of bottom absorber arrangement 184 arranged horizontally across seawater absorber tower 126, perpendicular to the flow of flue gas FG therethrough. The depth or thickness T2 of layer 170a measuring from a top surface 170 of collected scrubber liquid SL to the relatively less porous top surface 186 of bottom absorber arrangement 184 is about 1 mm to about 500 mm for efficient flue gas FG acid gas removal therein as the flue gas FG bubbles upwardly therethrough. As top surface 186 of bottom absorber arrangement 184 is relatively less porous, scrubber liquid SL from layer 170a while collected, gradually flows downwardly through bottom absorber arrangement 184.

The bottom absorber arrangement 184 comprises at least one to as many as three packed modules 184a each of differing or like construction, in like or differing materials selected from the group consisting of plastic, steel, wood, and suitable materials for enhanced flue gas-seawater contact. Examples of the suitable materials for construction of the packed modules 184a of bottom absorber arrangement 184 include Mellapak™ structured packing (available from Sulzer Chemtech AG, Winterthur, CH) and Pall™ rings (available from Raschig GmbH, Ludwigshafen, DE).). Bottom absorber arrangement 184 comprises at least one to as many as three individual packed modules 184a for ease in packed module 184a construction and material variation, as well as for ease of maintenance or replacement of individual packed module(s) 184a, rather than maintenance on or replacement of an entire, potentially relatively large, bottom absorber arrangement 184. The total thickness T3 of the bottom absorber arrangement 184 is measured from top surface 186 of bottom absorber arrangement 184 to bottom surface 188 of bottom absorber arrangement 184. Total thickness T3 of bottom absorber arrangement 184 is about 200 mm to about 2,000 mm for efficient flue gas FG acid gas removal by the scrubber liquid SL flowing downwardly therethrough contacting and mixing with the flue gas FG flowing upwardly therethrough.

Bottom absorber arrangement 184 is arranged a distance D3 above flue gas inlet 128. Distance D3, is measured from bottom surface 188 of bottom absorber arrangement 184 to top 128a of flue gas inlet 128. Distance D3 is about 0 mm to about 100 mm for efficient flue gas distribution and upward flow into bottom absorber arrangement 184.

The flue gas FG, after flowing out from the seawater absorber tower 126 through gas outlet 135a, may be released to the atmosphere or treated further in downstream equipment (not shown). The scrubber liquid SL after flowing downwardly within interior area 132 of seawater absorber tower 126 past flue gas inlet 128 is collected in collection tank 130a in lower portion 130 of seawater absorber tower 126 as collected liquid CL. Collected liquid CL flows via fluidly connected pipe 150, from seawater absorber tower 126 to a collected liquid CL treatment system 152. Collected liquid CL flow from absorber tower 126 to collected liquid CL treatment system 152 via pipe 150 is controlled by valve 150a. Once treated, treated seawater flows from collected liquid CL treatment system 152 via pipe 154. Pipe 154 is fluidly connected to release pipe 156 for release of treated seawater therethrough into a seawater source such as ocean 146. As another option, pipe 154 may also be fluidly connected to pressure pipe 148 for circulation of treated seawater to scrubber liquid tank 158 for use therein. Solid material SM separated from the collected liquid CL in the collected liquid CL treatment system 152 is removed from the collected liquid CL treatment system 152 via fluidly connected solids duct 152a. From solids duct 152a, solid material SM may be discarded and/or supplied to scrubber liquid tank 158 via fluidly connected duct 152b for use therein.

A method of using the subject seawater flue gas desulfurization system 123 comprises supplying flue gas FG that flows from a boiler 112 through a flue gas inlet 128 into an interior area 132 defined by a seawater absorber tower 126 below a bottom absorber arrangement 184. The flue gas FG flows upwardly through the bottom absorber arrangement 184 comprising at least one to as many as three packed modules of like or differing construction, in like or differing material wet with scrubber liquid SL flowing downwardly from a bubble bed absorber 176 on a relatively less porous top surface 186 thereof. Flue gas FG flowing upwardly through the bottom absorber arrangement 184 is thoroughly contacted by and mixed with the downwardly flowing scrubber liquid SL of seawater and alkaline agent for acid gas absorption by the scrubber liquid SL from the contacted flue gas FG. The bubble bed absorber 176 on the relatively less porous top surface 186 of the bottom absorber arrangement 184 comprises a layer 170a of downwardly flowing scrubber liquid SL collected on the relatively less porous top surface 186. Flue gas FG flowing upwardly bubbles up and through layer 170a of scrubber liquid SL collected on the relatively less porous top surface 186 for scrubber liquid SL absorption of acid gas from the contacted bubbling flue gas FG. Flue gas FG that has bubbled upward through the layer 170a of collected scrubber liquid SL of the bubble bed absorber 176 flows upwardly through top absorber arrangement 164. As flue gas FG flows upwardly through the top absorber arrangement 164 comprising at least one to as many as 50 packed modules 164a of like or differing construction, in like or differing materials, scrubber liquid SL is flowing downwardly therethrough contacting and thoroughly mixing with the flue gas FG for absorption of acid gas by the scrubber liquid SL therefrom. From the top absorber arrangement 164, flue gas FG flows upwardly through scrubber liquid SL flowing downwardly from a liquid distributor 136 arranged thereabove within the interior area 132 of the seawater absorber tower 126. Liquid distributor 136 is fluidly connected to a seawater source 146 and an alkaline agent source 162. Fresh seawater FS from the seawater source 146 and an alkaline agent AA from the alkaline agent source 162, are mixed as desired depending on operating conditions, type of alkaline agent and the concentration of the alkaline agent, to form scrubber liquid SL, which is distributed at a relatively low pressure of about 0.5 bar to about 10 bar by the liquid distributor 136. Additionally, collected liquid CL collected in a bottom area 130 of the seawater absorber tower 126 arranged below the flue gas inlet 128 may be circulated to the liquid distributor 136 for reuse within the seawater absorber tower 126. Flue gas FG flowing upwardly flows past the liquid distributor 136 prior to flowing out of seawater absorber tower 126 through gas outlet 135a. Following flow through the gas outlet 135a of the seawater absorber tower 126, flue gas FG may be released to the environment or flow to additional equipment (not shown) for further treatment.

The subject seawater flue gas desulfurization system 123 and method of using the same comprising a vertical absorber tower 126 as described above, is a simplification of prior art absorber towers 26 requiring many spray levels 36, each with many nozzles 40 to ensure complete interior area 32 spray coverage for efficient slurry and flue gas mixing for flue gas FG acid gas removal. Additionally, the subject system 123 and method using the seawater absorber tower 126 as described above, is relatively more compact as compared to prior art absorber towers 26 requiring as many as 20 spray levels 36, each with many nozzles 40 to ensure complete interior area 32 spray coverage for efficient slurry and flue gas mixing for flue gas FG acid gas removal. Given the simplified absorber arrangements 164, 184 and bubble bed absorber 176 within the subject seawater absorber tower 126, the subject seawater absorber tower 126 reduces both capital costs and operating costs associated therewith as compared to prior art absorber towers 26 requiring many pumps and many spray levels 36, each with many nozzles 40 to ensure complete interior area 32 spray coverage for efficient slurry and flue gas mixing for acid gas removal from the flue gas. Further, as the subject seawater absorber tower 126 ensures complete and thorough interior area 132 scrubber liquid SL and flue gas FG contact, flue gas FG acid gas removal efficiency is maintained or increased as compared to prior art absorber towers 26 requiring many pumps 42 and many spray levels 36, each with many nozzles 40 to ensure complete interior area 32 spray coverage.

In summary, the subject seawater flue gas desulfurization system 123 comprises a vertical absorber tower 126 defining an interior area 132, a gas inlet 128 and a gas outlet 135a, a liquid distributor 136 comprising a supply pipe 138, a plurality of perforations 138a through at least a lower portion 138b thereof, optionally with perforations 138a equipped with nozzles 140, all arranged in an upper portion 135 of the absorber tower 126 below the gas outlet 135a and operable to distribute at a relatively low pressure a scrubber liquid SL within the interior area 132 for downward flow thereof. As such, the scrubber liquid SL flows downwardly through a top absorber arrangement 164 comprising at least one to as many as 50 packed modules 164a each of like or differing construction, in like or differing materials. The total thickness T1 of the top absorber arrangement 164 measures about 200 mm to about 10,000 mm. The top absorber arrangement 164 is arranged a distance D1 below a lowest point P1 of liquid distributor 136, with D1 measuring about 50 mm to about 2,000 mm. A bubble bed absorber 176 is arranged below the top absorber arrangement 164, on a relatively less porous top surface 186 of a bottom absorber arrangement 184. The distance D2 between top absorber arrangement 164 and bottom absorber arrangement 184 measures about 100 mm to about 500 mm. The bubble bed absorber 176 on the relatively less porous top surface 186 comprises a layer 170a of collected scrubber liquid SL measuring about 1 mm to about 500 mm in depth or thickness T2. Arranged below the bubble bed absorber 176 is the bottom absorber arrangement 184. The bottom absorber arrangement 184 comprises at least one to as many as three packed modules 284a each of like or differing construction, in like or differing materials. The total thickness of bottom absorber arrangement 184 measures about 200 mm to about 2,000 mm. Like top absorber arrangement 164, bottom absorber arrangement 184 is arranged horizontally across absorber tower 126 perpendicular to the upward flow of flue gas FG therethrough. Bottom absorber arrangement 184 is arranged a distance D3 above gas inlet 128, with distance D3 measuring about 0 mm to about 100 mm for efficient flue gas FG distribution and upward flow.

In summary a method of using the subject seawater flue gas desulfurization system 123 comprises distributing a scrubber liquid SL in a downward flow from perforations 138a in pipe 138 of liquid distributor 136 arranged below a gas outlet 135a for mixing of the scrubber liquid SL with flue gas FG flowing upwardly through an interior area 132 defined by absorber tower 126, providing a top absorber arrangement 164 comprising at least one to as many as 50 packed modules 164a each of like or differing construction, in like or differing materials, wetted by downwardly flowing scrubber liquid SL for upwardly flowing flue gas FG contact and mixing therewith for flue gas FG acid gas absorption by the scrubber liquid SL therein, providing a bubble bed absorber 176 arranged below the top absorber arrangement 164, with the bubble bed absorber 176 comprising a layer 170a of collected scrubber liquid SL collected on a relatively less porous top surface 186 of a bottom absorber arrangement 184, for upward flue gas FG bubbling flow through the layer 170a of collected scrubber liquid SL for flue gas FG acid gas absorption by the collected scrubber liquid SL, and providing a bottom absorber arrangement 184 below the bubble bed absorber and above a gas inlet, with the bottom absorber arrangement 184 comprising at least one to as many as three packed modules 184a each of like or differing construction, in like or differing materials, for the downward flow of scrubber liquid SL therethrough for contact and mixing with an upward flow of flue gas FG for flue gas FG acid gas removal therefrom by the scrubber liquid SL. As such, the distance D1, between lowest point P1 of liquid distributor 136 within interior area 132 and the top surface 166 of top absorber arrangement 164 is about 50 mm to about 2,000 mm. The total thickness T1 of the top absorber arrangement 164 is about 200 mm to about 10,000 mm. The distance D2 between the top absorber arrangement 164 and the bottom absorber arrangement is about 100 mm to about 500 mm. The depth or thickness T2 of the layer 170a of the collected scrubber liquid SL of the bubble bed absorber 176 is about 1 mm to about 500 mm. The total thickness T3 of the bottom absorber arrangement 184 is about 200 mm to about 2,000 mm. The distance D3 between the bottom absorber arrangement 184 and the gas inlet 128 is about 0 mm to about 100 mm.

## Claims

1. A seawater flue gas desulfurization system comprising:
a vertical absorber tower with an interior area, a gas inlet and a gas outlet;
a liquid distributor arranged in an upper portion of the absorber tower below the gas outlet operable to disperse a scrubber liquid within the interior area for downward flow thereof;
a top absorber arrangement arranged below the liquid distributor;
a bubble bed absorber arranged below the top absorber arrangement on a top surface of a bottom absorber arrangement; and
the bottom absorber arrangement arranged above the gas inlet for upward flow of a flue gas therethrough.

2. The seawater flue gas desulfurization system of claim 1, wherein the liquid distributor comprises a supply pipe with a plurality of perforations therethrough, operable for distribution of the scrubber liquid.

3. The seawater flue gas desulfurization system of claim 1, wherein the top absorber arrangement is arranged a distance of about 50 mm to about 2,000 mm below the liquid distributor.

4. The seawater flue gas desulfurization system of claim 1, wherein the top absorber arrangement has a total thickness of about 200 mm to about 10,000 mm.

5. The seawater flue gas desulfurization system of claim 1, wherein the bubble bed absorber comprises a layer of collected scrubber liquid having a depth or thickness of about 1 mm to about 500 mm.

6. The seawater flue gas desulfurization system of claim 1, wherein the bottom absorber arrangement is arranged a distance of about 100 mm to about 500 mm below the top absorber arrangement.

7. The seawater flue gas desulfurization system of claim 1, wherein the bottom absorber arrangement has a total thickness of about 200 mm to about 2,000 mm.

8. The seawater flue gas desulfurization system of claim 1, wherein the bottom absorber arrangement is arranged about 0 mm to about 100 mm above the gas inlet.

9. A method of using the seawater flue gas desulfurization system of claim 1, the method comprising:
distributing in a downward flow a scrubber liquid from the perforations of the liquid distributor for mixing with flue gas flowing upwardly;
contacting the flue gas with the scrubber liquid in the top absorber arrangement for flue gas acid gas absorption by the scrubber liquid;
contacting the flue gas with the layer of scrubber liquid collected forming the bubble bed absorber for flue gas acid gas absorption by the scrubber liquid; and
contacting the flue gas with the scrubber liquid in the bottom absorber arrangement for flue gas acid gas absorption by the scrubber liquid.

10. The method of claim 9, wherein the distance between the liquid distributor and the top absorber arrangement is about 50 mm to about 2,000 mm.

11. The method of claim 9, wherein the total thickness of the top absorber arrangement is about 200 mm to about 10,000 mm.

12. The method of claim 9, wherein the distance between the top absorber arrangement and the bottom absorber arrangement is about 100 mm to about 500 mm.

13. The method of claim 9, wherein the depth or thickness of the layer of collected scrubber liquid is about 1 mm to about 500 mm.

14. The method of claim 9, wherein the total thickness of the bottom absorber arrangement is about 200 mm to about 2,000 mm.

15. The method of claim 9, wherein the distance between the bottom absorber arrangement and the gas inlet is about 0 mm to about 100 mm.
